# FASCICULE DE BREVET EUROPEEN

(11) **EP 0 874 791 B1**
(45) Date de publication et mention de la délivrance du brevet: **20.10.2004**
(21) Numéro de dépôt: 97901104.6
(22) Date de dépôt: 17.01.1997
(51) Int. Cl.: C05F 17/00, C05F 17/02

(54) **PROCEDE DE DEGRADATION PAR VOIE BIOLOGIQUE DE PRODUITS ORGANIQUES, ET INSTALLATIONS DE MISE EN OEUVRE**
VERFAHREN ZUM BIOLOGISCHEN ABBAU VON ORGANISCHEN STOFFEN UND ANLAGE ZUM AUSFÜHREN DES VERFAHRENS
METHOD FOR BIOLOGICALLY DECOMPOSING ORGANIC MATERIALS, AND FACILITIES THEREFOR

(30) Priorité: 19.01.1996 FR 9600576
(43) Date de publication de la demande: 04.11.1998
(73) Titulaire: Tempe, Maurice, 13160 Chateaurenard (FR)
(72) Inventeur: Tempe, Maurice, 13160 Chateaurenard (FR)
(74) Mandataire: Roger-Petit, Georges
(86) Numéro de dépôt international: PCT/FR1997/000084
(87) Numéro de publication internationale: WO 1997/026229

(56) Documents cités:
- WO-A-93/23351
- FR-A- 2 642 825
- US-A- 4 869 877

## Description

L'invention concerne un procédé de dégradation par voie biologique de produits organiques et des installations de mise en oeuvre de ce procédé.

A l'heure actuelle, essentiellement deux types de produits organiques posent des problèmes de traitement, soit en vue de leur valorisation, soit en vue de leur stabilisation avant leur mise en décharge ou leur incinération, du fait de leurs poids et volumes importants et toujours croissants. Il s'agit, d'une part, des déchets végétaux (herbes, déchets d'élagage, fruits et légumes retirés des marchés, fraction organique des ordures ménagères, etc) et d'autre part, des déchets industriels, par exemple les graisses et les boues des traitements des eaux usées urbaines ou industrielles, ainsi que des déchets d'origine animale.

Les déchets végétaux sont soumis le plus souvent à un compostage en andains, soit isolément, soit en mélange avec d'autres matériaux pour préparer des produits d'amendement des sols ou des substrats de culture. Une fermentation se produit avec consommation d'oxygène, dégagement de gaz carbonique et d'eau, et élévation de température. L'apport d'oxygène nécessaire à la transformation la plus complète possible est effectué par retournement périodique des andains, mais la durée du compostage est de plusieurs mois avec une emprise au sol importante.

Dans le cas des boues, le terme « compostage » est utilisé par analogie avec le traitement des matières végétales, mais il s'agit en fait d'une déshydratation et d'une stabilisation des boues par voie biologique. Différentes techniques comme le compostage en andains (comme pour le compostage des matières végétales), l'utilisation de réacteurs de formes et de modes de fonctionnement divers, sont connues mais la déshydratation nécessaire (réduction d'au moins 50% de la teneur en eau initiale) est longue à obtenir dans le cas d'un compostage et/ou nécessite l'emploi de dispositifs de mélange ou de remuage complexes et coûteux au point de vue énergétique, avec en outre le plus souvent besoin d'une main d'oeuvre importante et peu de maîtrise des nuisances.

FR-A-2 642 825 résout partiellement ces problèmes en fournissant un procédé de traitement biologique avec aspiration d'air et évacuation de l'eau en partie inférieure d'un réacteur de traitement, procédé dans lequel le débit d'air est régulé en fonction de la température de l'air sortant du produit en cours de traitement, ainsi que des installations de mise en oeuvre de ce procédé. La régulation permet, dans ce procédé, de régler le débit en fonction de l'évolution naturelle de la température au cours du traitement. La durée de traitement reste longue pour atteindre le compostage ou la dégradation complète. Bien que l'air et l'eau recueillis chauds puissent être traités par échange de chaleur pour récupérer de l'énergie, le coût du traitement reste encore élevé.

US-A-4 869 877 décrit une installation de compostage à ventilation forcée (insufflation d'air) permettant d'établir un profil de températures maximales dans un couloir de compostage, avec un maximum de température en milieu de couloir. Une machine de transfert assure quotidiennement un déplacement continu des produits en cours de traitement le long du couloir de compostage.

L'invention concerne un procédé selon la revendication 1 et une installation selon la revendication 6.

Un tel procédé permet de traiter en particulier des boues de traitement des eaux usées, urbaines ou industrielles, ainsi que des déchets végétaux de diverses origines : herbes, feuilles, déchets d'élagage, surplus ou retraits agricoles, etc. Les durées de traitement des déchets végétaux sont plus longues que celles nécessaires au traitement des boues et on atteint, avec les techniques classiques, des valeurs de six mois au moins pour le compostage des déchets agricoles alors qu'elles sont de six semaines à deux mois pour les boues.

Un avantage considérable du procédé de la présente invention est qu'il permet de manière totalement inattendue d'associer un réacteur de dégradation de boues à un réacteur de dégradation de matières végétales. En effet, l'air aspiré dans les deux premières zones du réacteur à boues est chaud, humide, chargé de gaz carbonique et d'ammoniac, de même que les eaux de condensation du traitement des boues sont chaudes et chargées de gaz carbonique et d'ammoniac. Or, l'apport de chaleur, d'humidité, de gaz carbonique et d'ammoniac aux matières végétales accélère de manière très importante les réactions de fermentation conduisant au compostage. En recyclant donc l'air et l'eau provenant du traitement des boues dans les zones de compostage à réaction habituellement ralentie, on réactive le processus et on accélère le traitement global.

Un tel recyclage ne pouvait pas être envisagé avec les procédés de traitement classiques, puisque la composition de l'air et de l'eau recueillis évolue au fil du temps et qu'en fin de traitement, ils ne contiennent plus suffisamment de chaleur, de gaz carbonique et d'ammoniac pour être utiles à l'activation de la fermentation des matières végétales. Par contre, en utilisant un réacteur divisé en plusieurs zones, on peut sélectionner les zones dans lesquelles les réactions de fermentation des boues sont actives et produisent suffisamment de chaleur, de gaz carbonique et d'ammoniac, même si les quantités correspondantes diminuent légèrement pendant la durée de traitement, et ne recycler que l'air et l'eau recueillis dans ces zones.

Il est indifférent que la durée de séjour dans les diverses zones du réacteur de dégradation des boues soit différente de la durée de séjour dans les zones du réacteur de compostage : du fait du déroulement du procédé en étapes successives matériellement distinctes, il y a toujours des zones de production d'air et d'eau dont la composition convient pour un recyclage efficace.

Bien entendu, il est possible de réaliser des ensembles de réacteurs de traitement de boues et des ensembles de réacteurs de compostage de matières végétales, en utilisant deux ou plusieurs couloirs adjacents, avec ou sans recyclage de l'air et de l'eau recueillis dans le traitement des boues vers le compostage des matières végétales.

Il est à noter que la mise en oeuvre de l'étape (a) et éventuellement de l'étape (b) permet de maintenir les produits traités à une température voulue pendant un temps donné, en satisfaisant ainsi certaines obligations sanitaires réglementaires.

Encore un autre avantage du procédé de l'invention est que, du fait de la séparation en zones d'activité décroissante, la production d'odeurs gênantes diminue de la première à la dernière zone. Dans le cas d'une installation couverte, il est alors possible de séparer matériellement les zones productrices d'odeurs gênantes des autres : le volume d'air à traiter est alors nettement réduit, avec donc des coûts réduits.

Le recyclage de l'air et de l'eau provenant du traitement des boues au compostage des matières végétales, en plus d'activer ce compostage en permettant de le réaliser en environ deux mois, constitue une importante récupération de chaleur et de constituants (composés odoriférants et ammoniac) dont le rejet sans traitement est difficilement envisageable.

En outre, le traitement tant des boues que des matières végétales se faisant dans des couloirs permet, en adoptant des dimensions uniformes pour ceux-ci - même largeur, même longueur totale, même longueur de chaque zone - d'utiliser une même machine de chargement et une même machine de retournement qui peut, une fois engagée dans le couloir à traiter, travailler de manière automatique. Il est donc possible de réaliser des économies de main d'oeuvre et en même temps d'optimiser l'utilisation d'une unique machine de retournement fonctionnant à une courte périodicité au lieu de devoir disposer de plusieurs machines travaillant pendant des périodes restreintes mais espacées.

Des machines de retournement sont connues et comportent à l'avant un dispositif de prélèvement de produit, un dispositif de transfert vers un ou généralement deux convoyeurs de pente différente rejetant le produit à l'arrière de la machine. La machine de retournement utilisée dans la présente invention est conçue sur le même principe et est adaptée à la largeur des couloirs constituant les réacteurs, et est en outre avantageusement munie de dispositifs coopérant avec des dispositifs complémentaires disposés à l'entrée et à la sortie des couloirs de façon à permettre une avance automatisée de la machine. De tels dispositifs peuvent être mécaniques, électriques, électromécaniques ou électroniques, et ne rentrent pas dans le cadre de la présente invention.

A titre d'exemple, une installation type mettant en oeuvre les procédés décrits précédemment comprend :
- une zone de prémélange des boues et d'un produit structurant (écorces, pailles, rafles de raisin ou de maïs, par exemple, plaquettes de bois, cagettes ou débris de cagettes, ou également des produits structurants biologiquement inertes comme des déchets de matières plastiques ou de caoutchouc). Le produit structurant a essentiellement pour fonction d'empêcher le colmatage de la masse de boues, d'augmenter la surface de contact pour les réactions biologiques et d'optimiser l'apport et la circulation d'oxygène,
- une ou plusieurs batteries de réacteurs de traitement des boues, équipés de dispositifs d'aspiration/insufflation d'air et de collecte d'eaux,
- une ou plusieurs batteries de réacteurs de traitement de matières végétales,
- un ensemble de conduites de recyclage des eaux et de l'air recueillis dans le traitement des boues vers :
   . un traitement de récupération d'énergie et des matériaux intéressants, et/ou
   . le traitement de matières végétales,
- une ou plusieurs zones de post-traitement, comportant la séparation des produits de dégradation et du produit structurant, par exemple par criblage, en vue du recyclage du produit structurant et de l'envoi vers des zones de stockage et/ou de conditionnement des produits de récupération de la dégradation des produits organiques.

D'autres caractéristiques et avantages de la présente invention apparaîtront à la lecture de la description détaillée qui suit, faite en référence aux dessins annexés, dans lesquels :
- la figure 1 est une vue schématique en plan d'une installation mettant en oeuvre le procédé de la présente invention,
- la figure 2 est une vue schématique en coupe de la machine de retournement utilisée dans la présente invention, et
- la figure 3 est une vue de dessus de la machine de la figure 2.

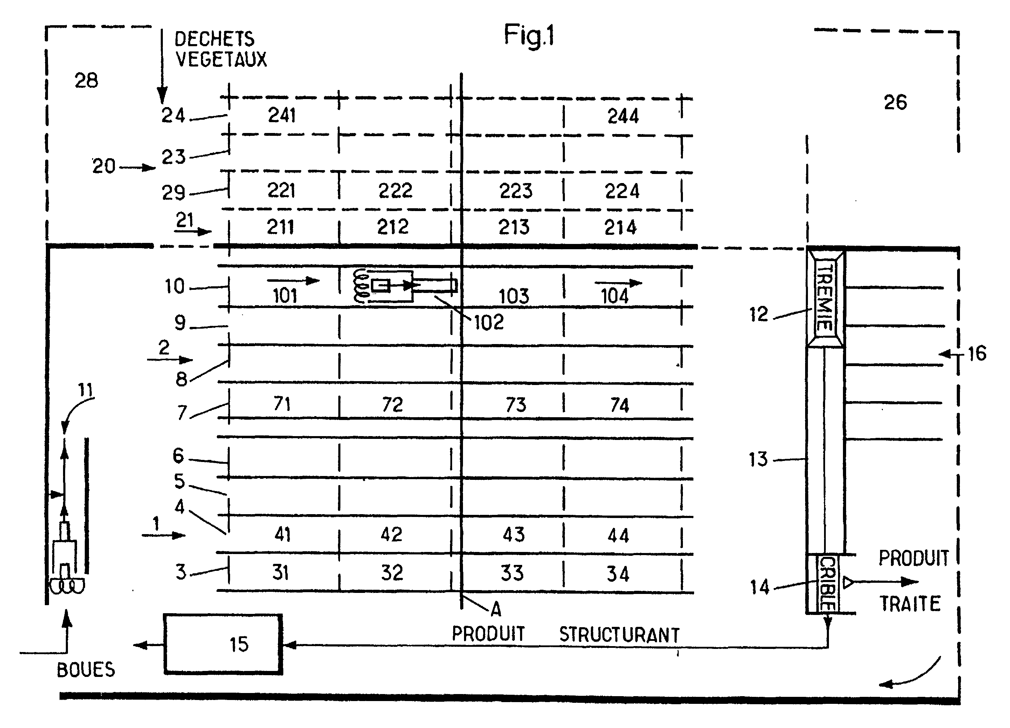

La figure 1 représente un schéma en plan d'une installation mettant en oeuvre le mode de réalisation préféré de la présente invention.

A titre d'exemple, cette installation comporte deux batteries 1, 2, de quatre réacteurs 3-6 et 7-10. Chaque réacteur ou couloir est divisé en quatre zones numérotées 31, 32, 33 et 34 dans le réacteur 3, 41, 42, 43 et 44 dans le réacteur 4, et ainsi de suite pour les autres réacteurs. Le rapport entre largeur et longueur de chaque zone est généralement compris entre 1 et 3.

Les couloirs sont réalisés par mise en place de parois verticales, réalisées en parpaing ou en béton, ou éventuellement en planches de bois montées sur des poteaux métalliques, comme décrit dans FR-A-2 642 825.

Le sol sur lequel sera déposé le mélange de produits à traiter est de nature indifférente, mais comporte un réseau perforé permettant la circulation d'air à travers le mélange contenu dans le réacteur et la collecte des eaux provenant du traitement des matières. Le réseau perforé est avantageusement constitué de canalisations perforées en leur partie supérieure. Le réseau perforé de chaque zone de chaque réacteur est indépendant de celui des autres zones, en ce sens qu'il est individualisé pour permettre d'établir des débits d'air différents d'une zone à une autre et de recueillir sélectivement les eaux résultant du traitement.

A proximité des batteries de réacteurs, se situe une zone de mélange 11 constituée, par exemple, par un couloir de même largeur que les couloirs 3 à 10. Les boues à traiter y sont chargées, additionnées de la quantité appropriée de produit structurant et le mélange est effectué avantageusement avec la machine de retournement qui sera décrite plus en détail ci-après.

A la sortie des réacteurs, les produits obtenus sont chargés dans une trémie 12 alimentant un convoyeur 13 et un crible 14 séparant le produit résultant du traitement et le produit structurant qui est recyclé à une zone de stockage 15, tandis que le produit traité est envoyé dans une zone de stockage et/ou de conditionnement 16.

Aux deux batteries 1 et 2 de traitement de boues, est associée avantageusement une batterie 20 constituée par exemple de quatre couloirs 21, 22, 23, 24, divisés en quatre zones 211-214, 221-224, ..., 241-244 pour le compostage de matières végétales. Une zone 25 de prémélange des déchets végétaux et d'un éventuel produit structurant 25 est prévue, de même qu'une zone de séparation 26 en fin de traitement, les installations de mélange et de séparation pouvant être identiques aux installations de mélange et de séparation associées aux batteries 1 et 2 et n'étant pas représentées.

De la même manière, pour ne pas surcharger le schéma, les canalisations d'aspiration/insufflation d'air, les canalisations de collecte des eaux et les canalisations de recyclage vers la batterie 20 n'ont pas été représentées.

Chaque zone ou unité de ventilation (UV) de chaque réacteur est équipée d'une vanne de réglage du débit, et les deux premières zones de chaque couloir de réaction sont équipées en outre d'une sonde thermique reliée à la vanne de réglage : lorsque la température relevée par la sonde thermique monte, cette sonde commande l'ouverture en conséquence de la vanne de réglage en provoquant une augmentation du débit d'air aspiré et en abaissant la température. Au contraire, si la température relevée par la sonde baisse, la sonde commande la fermeture de la vanne de réglage, diminuant le débit d'air aspiré en faisant monter la température.

Le schéma particulier de mise en place et de raccordement des conduites d'insufflation/aspiration et de collecte des eaux ainsi que la disposition particulière des vannes de réglage et des sondes thermiques n'est pas décrit, car il est du domaine des connaissances générales de l'homme du métier et peut être optimisé selon les conditions particulières de construction de l'installation globale.

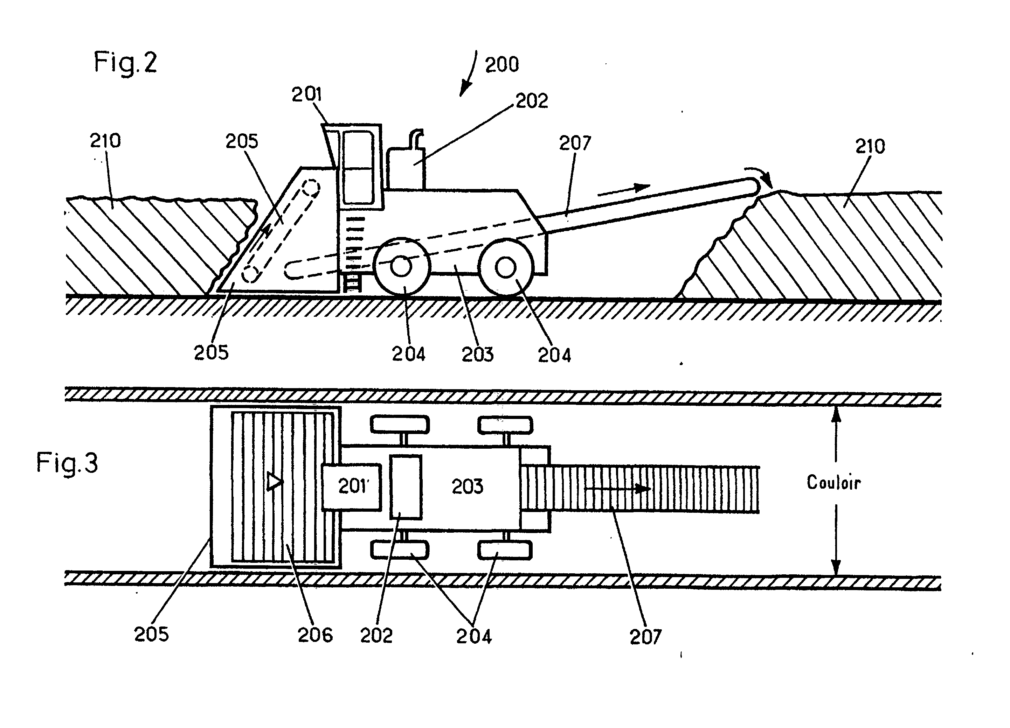

On va maintenant décrire de manière relativement simplifiée la machine de retournement particulièrement adaptée à l'utilisation dans la présente invention, en se référant aux figures 2 et 3.

La machine de retournement 200 comporte un poste de pilotage 201, un moteur 202, un châssis 203 et plusieurs roues motrices, par exemple quatre, 204. A l'avant de la machine, est monté un élément de reprise 205 qui prélève de la matière 210 en cours de traitement. Un premier convoyeur 206 la renvoie sur un deuxième convoyeur 207 de pente plus faible qui l'amène à l'arrière de la machine et la laisse tomber en reformant un tas après brassage et retournement de la matière initialement prélevée. La partie avant de la machine peut être équipée de capteurs coopérant avec des dispositifs appropriés disposés à l'entrée et à la sortie des couloirs de façon à commander l'avance de la machine et à arrêter cette avance à la fin du couloir. Comme indiqué précédemment, les capteurs et les moyens coopérant avec eux peuvent être de différents types et ne seront pas décrits plus en détail.

Le procédé selon l'invention consiste :
- à charger dans un premier réacteur 3, 4, ..., 10 un mélange de produits organiques et de produit structurant dans la première zone 31, 41, ..., 101, selon le stade d'avancement des différents couloirs, et à y établir une aspiration d'air et y laisser le mélange pendant une durée prédéterminée, par exemple de 3 à 8 jours, et de préférence de 4 à 7 jours, en effectuant une régulation de température telle que l'air sortant reste à une température maximale de consigne, par exemple de 50 à 60°C, à laquelle se produit un maximum de fermentation et de dégradation ;
- après cette période, à décharger le produit déchargé par transfert et retournement dans la zone suivante où il est traité pendant la même durée, puis il est transféré dans la troisième zone et éventuellement la quatrième zone, où il est dans les deux cas traité pendant la même durée de temps prédéterminée. Le transfert s'effectue en utilisant la machine décrite précédemment avec référence aux figures 2 et 3, par introduction de la machine dans la dernière zone de traitement d'où elle évacue le produit traité finalement, en transférant progressivement le produit de la quatrième zone vers une zone de séparation du produit de traitement obtenu et du produit structurant ; puis entrant dans la troisième zone, la machine transfère le produit de la troisième zone dans la quatrième zone, puis transfère le produit de la deuxième zone dans la troisième zone, puis continuant son avance, transfère le produit de la première zone dans la deuxième zone, libérant ainsi la première zone pour une nouvelle charge de produit frais à traiter.

Il est évident que les différents couloirs peuvent être à des stades de traitement différents et qu'en fonction des circonstances particulières, il y aura pratiquement toujours des produits en cours de fermentation rapide dans une première zone, des produits en cours de fermentation moins rapide dans une deuxième zone, et des produits en fin de traitement dans des troisième et quatrième zones.

Pendant ce temps, si une zone de traitement de déchets végétaux est associée, on procède de la même façon dans les couloirs 21 à 24, en introduisant les produits frais dans les zones 211, 221, 231 et 241, puis en les transférant dans les zones 212, 222, 232 et 242, puis 213, 223, 233 et 243 et enfin 214, 224, 234 et 244 à l'aide de la machine de retournement précédemment décrite. La durée de séjour dans les différentes zones est comme précédemment identique d'une zone à une autre mais plus longue et peut être de quinze jours à trois semaines, au lieu de trois à huit jours pour le traitement des boues.

Les eaux et l'air des première et deuxième zones des batteries de traitement de boues sont recyclés vers au moins les deuxième et troisième zones de traitement des déchets végétaux. Leur recyclage à la première zone est fonction de la nature des déchets végétaux en cours de traitement; des déchets « humides » (herbes, fruits, légumes) ne nécessitent pas dans ce premier temps un apport d'eau et leur fermentation dégage des odeurs qu'il ne convient pas de renforcer dans la première zone. Par contre, si les déchets végétaux sont des déchets « secs » (rafles de maïs par exemple), un apport d'eau sera approprié.

On voit donc que l'invention présente des avantages considérables dans l'économie de matériel et de main-d'oeuvre, ainsi essentiellement que dans la récupération des produits secondaires de traitement des boues en vue du traitement de déchets végétaux, de manière tout à fait uniforme et régulière du fait de la disposition en zones séparées des différentes étapes de traitement.

Il est en outre intéressant de noter que le fait d'effectuer le traitement des boues en deux zones de réaction relativement rapides et violentes, permet de restreindre l'espace où se dégagent des odeurs particulièrement gênantes à une zone spécifique bien délimitée que l'on peut confiner et dans laquelle on peut récupérer l'air ambiant et le traiter pour éviter des dégagements d'odeurs désagréables dans l'environnement. La limite est matérialisée sur la figure 1 par la ligne A. Ceci permet de réaliser des économies de coût et d'énergie importantes.

Les produits recueillis éventuellement au cours du traitement des déchets végétaux dans les premières zones sont recyclés dans les zones suivantes.

## Revendications

1. Procédé de dégradation par voie biologique de produits organiques sous forme d'une part de boues ou d'un mélange de boues avec des déchets organiques et d'autre part de matières végétales, le procédé comprenant le mélange des produits organiques avec un produit structurant et le chargement dans un réacteur de dégradation par voie biologique, et étant **caractérisé en ce qu'**il comprend
l'exécution d'un premier processus de dégradation par voie biologique de produits organiques sous forme de boues ou d'un mélange de boues avec des déchets organiques dans un premier réacteur de traitement qui est un couloir ouvert aux deux extrémités et divisé en au moins trois zones équipée, chacune, de façon indépendante, de dispositifs d'aspiration/insufflation d'air en partie inférieure et d'un dispositif de collecte et d'évacuation d'eau, le premier processus comportant :
a) l'introduction du mélange du produit structurant et de boues ou d'un mélange de boues avec des déchets organiques dans une première zone du premier réacteur dans laquelle est établie une aspiration d'air dont le débit est ajusté par pilotage thermostatique afin que la température du produit en cours de traitement ne dépasse pas une valeur de consigne,
b) le transfert à une deuxième zone du premier réacteur par retournement du produit obtenu dans l'étape a), et la poursuite du traitement du produit par aspiration d'air dont le débit est ajusté par pilotage thermostatique afin que la température du produit en cours de traitement ne dépasse pas une valeur de consigne, et
c) le transfert à une troisième zone du premier réacteur par retournement du produit obtenu dans l'étape b), et la poursuite du traitement du produit par aspiration d'air dont le débit est ajusté par pilotage thermostatique afin que la température du produit en cours de traitement ne dépasse pas une valeur de consigne, et
l'exécution d'un second processus de dégradation par voie biologique de matières végétales dans un second réacteur de traitement qui est un couloir ouvert aux deux extrémités et divisé en au moins trois zones équipée, chacune, de façon indépendante, de dispositifs d'aspiration/insufflation d'air en partie inférieure et d'un dispositif de collecte et d'évacuation d'eau, le second processus comportant :
d) l'introduction du mélange de matières végétales et du produit structurant dans une première zone du second réacteur dans laquelle est établie une aspiration d'air dont le débit est ajusté par pilotage thermostatique afin que la température du produit en cours de traitement ne dépasse pas une valeur de consigne,
e) le transfert à une deuxième zone du second réacteur par retournement du produit obtenu dans l'étape d), et la poursuite du traitement du produit par aspiration d'air dont le débit est ajusté par pilotage thermostatique afin que la température du produit en cours de traitement ne dépasse pas une valeur de consigne, et
f) le transfert à une troisième zone du second réacteur par retournement du produit obtenu dans l'étape e), et la poursuite du traitement du produit par aspiration d'air dont le débit est ajusté par pilotage thermostatique afin que la température du produit en cours de traitement ne dépasse pas une valeur de consigne,
le procédé comprenant en outre
la transmission de l'air aspiré ou de l'eau évacuée dans l'une au moins des étapes a) et b) du premier processus de traitement des boues, ou d'un mélange de boues et de déchets organiques, à l'une au moins des étapes b) et c) du second processus de traitement de matières végétales.

2. Procédé selon la revendication 1, **caractérisé en ce que** la poursuite du traitement du produit par aspiration d'air de l'étape c) est exécutée avec un débit d'aspiration ou d'insufflation d'air prédéterminé.

3. Procédé selon l'une des revendications 1 et 2, **caractérisé en ce que** le transfert des produits d'une zone à une autre est effectué de manière discontinue à la fin de la durée de séjour prédéterminée dans chaque zone, la totalité des produits d'une zone étant transférée, par retournement, à la zone suivante.

4. Procédé selon l'une quelconque des revendications précédentes, **caractérisé en ce que** le transfert par retournement des produits traités commence par ceux qui sont obtenus dans la dernière étape et remonte jusqu'à la première.

5. Procédé selon l'une quelconque des revendications précédentes, **caractérisé en ce qu'**il comprend en outre, pour chacun des deux processus, l'enlèvement le produit résultant de la dernière zone, la séparation du produit structurant du produit de dégradation, et le recyclage, au moins en partie, du produit structurant.

6. Installation de mise en oeuvre d'un procédé selon l'une quelconque des revendications précédentes, **caractérisée en ce qu'**elle comprend :
une zone de prémélange de boues ou d'un mélange de boues et de déchets organiques avec un produit structurant,
un ou plusieurs premiers réacteurs de traitement destiné à recevoir le prémélange de la zone de prémélange, chaque premier réacteur étant un couloir ouvert aux deux extrémités et divisé en au moins trois zones équipée, chacune, de façon indépendante, de dispositifs d'aspiration/insufflation d'air en partie inférieure et d'un dispositif de collecte et d'évacuation d'eau,
un ou plusieurs seconds réacteurs de traitement de matières végétales, chaque second réacteur étant un couloir ouvert aux deux extrémités et divisé en au moins trois zones équipée, chacune, de façon indépendante, de dispositifs d'aspiration/insufflation d'air en partie inférieure et d'un dispositif de collecte et d'évacuation d'eau, et
un ensemble de conduites destinées à recycler au moins l'eau collectée ou l'air aspiré dans au moins un premier réacteur de traitement des boues ou d'un mélange de boues et de déchets organiques vers au moins un second réacteur de traitement de matières végétales.

7. Installation selon la revendication 6, **caractérisée en ce qu'**elle comprend une seconde zone de prémélange de matières végétales avec un produit structurant.

8. Installation selon l'une des revendications 6 et 7, **caractérisée en ce que** les réacteurs comportent au moins trois zones, et l'ensemble de conduites comprend des conduites destinées à recycler au moins l'eau collectée ou l'air aspiré dans au moins une première ou une seconde zone d'un premier réacteur de traitement des boues ou d'un mélange de boues et de déchets organiques vers au moins une seconde ou une troisième zone respectivement d'un second réacteur de traitement de matières végétales.

9. installation selon l'une des revendications 6 à 8, **caractérisée en ce que** les deux premières zones au moins d'un premier réacteur de traitement des boues ou d'un mélange de boues et de déchets organiques comportent chacune une sonde thermique reliée à une vanne de réglage incorporée à l'ensemble de conduites.

10. Installation selon l'une des revendications 6 à 9, **caractérisée en ce qu'**elle comporte en outre au moins une zone de post-traitement destinée à la séparation des produits de dégradation et du produit structurant et au recyclage du produit structurant.

## Patentansprüche

1. Verfahren zum biologischem Abbau von organischem Material in Form, einerseits von Schlämmen oder von einem Gemisch von Schlämmen mit organischen Abfällen, und andererseits von pflanzlichem Material, welches Verfahren das Mischen vom organischen Material mit einem Strukturmaterial sowie das Beladen eines biologischen Abbaureaktors umfasst, und **dadurch gekennzeichnet ist, dass** :
ein erster biologischer Abbauprozess von organischem Material in Form von Schlämmen oder von einem Gemisch von Schlämmen mit organischen Abfällen in einem ersten Wiederaufbereitungsreaktor durchgeführt wird, der ein an beiden Enden offenes Kanal ist, und der mindestens in drei Zonen unterteilt ist, wobei jede dieser Zonen unabhängig mit Luftabsaug-/Luftzufuhrvorrichtungen im unteren Bereich und mit einer Wassersammmel- und Wasserablaufvorrichtung versehen ist, wobei der erste Prozess
a) die Zufuhr des Gemisches aus Strukturmaterial und Schlämmen oder einem Gemisch von Schlämmen und organischen Abfällen einer ersten Zone des ersten Reaktors, in der die Luft abgesaugt wird, wobei die Ausströmmenge durch thermostatische Steuerung eingestellt wird, damit die Temperatur des in Verarbeitung befindlichen Produkts einen behandlungsgemässen Richtwert nicht überschreitet,
b) die Verlegung in eine zweite Zone des ersten Reaktors durch Wenden des in Phase a) erhaltenen Produkts, und die Weiterverarbeitung des Produkts durch Absaugen von Luft, mit der durch thermostatische Steuerung eingestellten Auströmmenge, damit die Temperatur des in Verarbeitung befindlichen Produkts einen behandlungsgemässen Richtwert nicht überschreitet, und
c) die Verlegung in eine dritte Zone des ersten Reaktors durch Wenden des in Phase b) erhaltenen Produkts, und die Weiterverarbeitung des Produkts durch Absaugen von Luft, mit der durch thermostatische Steuerung eingestellten Auströmmenge, so dass die Temperatur des in Aufbereitung befindlichen Produkts einen behandlungsgemässen Richtwert nicht überschreitet, umfasst, und
ein zweiter biologischer Abbauprozess von pflanzlichem Material in einem zweiten Wiederaufbereitungsreaktor durchgeführt wird, der ein an beiden Enden offenes Kanal ist und mindestens in drei Zonen unterteilt ist, wobei jede dieser Zonen unabhängig mit Luftabsaug-/Luftzufuhrvorrichtungen im unteren Bereich und mit einer Wassersammmel- und Wasserablaufvorrichtung versehen ist, wobei der zweite Prozess:
d) die Zufuhr des Gemisches aus pflanzlichem Material und Strukturmaterial einer ersten Zone des zweiten Reaktors, in der die Luft abgesaugt wird, wobei die Ausströmmenge durch thermostatische Steuerung eingestellt wird, damit die Temperatur des in Verarbeitung befindlichen Produkts einen behandlungsgemässen Richtwert nicht überschreitet,
e) die Verlegung in eine zweite Zone des zweiten Reaktors durch Wenden des in Phase d) erhaltenen Produkts, und die Weiterverarbeitung des Produkts durch Absaugen von Luft, mit der durch thermostatische Steuerung eingestellten Auströmmenge, damit die Temperatur des in Verarbeitung befindlichen Produkts einen behandlungsgemässen Richtwert nicht überschreitet, und
f) die Verlegung in eine dritte Zone des zweiten Reaktors durch Wenden des in Phase e) erhaltenen Produkts, und die Weiterverarbeitung des Produkts durch Absaugen von Luft, mit der durch thermostatische Steuerung eingestellten Auströmmenge, damit die Temperatur des in Verarbeitung befindlichen Produkts einen behandlungsgemässen Richtwert nicht überschreitet, umfasst,
wobei das Verfahren zudem
die Übertragung der Luft oder des Wassers, welche zumindest in einer der Phasen a) und b) des ersten Aufarbeitungsprozesses für Schlämme oder für ein Gemisch aus Schlämmen und organischem Material abgesaugt oder abgelassen wurden, auf zumindest eine der Phasen b) und c) des zweiten Aufbereitungsprozesses für pflanzlichem Material, umfasst.

2. Verfahren nach Anspruch 1, **dadurch gekennzeichnet, dass** die Weiterverarbeitung des Produkts durch Absaugen von Luft in der Phase C mit einer vorbestimmten Luftausström- oder Luftzufuhrmenge erfolgt.

3. Verfahren nach einem der Ansprüche 1 und 2, **dadurch gekennzeichnet, dass** die Verlegung der Produkten von einer Zone in eine andere Zone diskontinuierlich am Ende der in jeder Zone vorbestimmten Aufenthaltszeit erfolgt, wobei die Gesamtheit der Produkten einer Zone in die folgende Zone durch Wenden verlegt wird.

4. Verfahren nach einem der vorstehenden Ansprüche, **dadurch gekennzeichnet, dass** die Verlegung durch Wenden der behandelten Produkte zunächst mit den in der letzten Phase erhaltenen Produkten erfolgt und dann mit der ersten Phase fortgeführt wird.

5. Verfahren nach einem der vorstehenden Ansprüche, **dadurch gekennzeichnet, dass** dies zudem in jeden der beiden Prozesse die Abholung des resultierenden Produkts aus der letzten Zone, die Trennung des Strukturmaterials vom Abbauprodukt und das zumindest teilweise Recycling des Strukturmaterials umfasst.

6. Vorrichtung zur Anwendung eines Verfahrens nach einem der vorstehenden Ansprüche, **dadurch gekennzeichnet, dass** sie:
- eine Vormischzone für Schlämme oder für ein Gemisch aus Schlämmen und organischem Material mit einem Strukturmaterial,
- einen oder mehrere ersten Wiederaufbereitungsreaktoren zur Aufnahme vom Vorgemisch aus der Vormischzone, wobei der erste Reaktor oder die ersten Reaktoren jeweils ein an beiden Enden offenes Kanal sind und mindestens in drei Zonen unterteilt sind, wobei jede dieser Zonen unabhängig mit Luftabsaug-/Luftzufuhrvorrichtungen im unteren Bereich und mit einer Wassersammmel- und Wasserablaufvorrichtung versehen ist,
- einen oder mehrere zweiten Reaktoren zur Behandlung von pflanzlichem Material, wobei der zweite Reaktor oder die zweiten Reaktoren jeweils ein an beiden Ende offenes Kanal sind und mindestens in drei Zonen unterteilt sind, wobei jede der Zonen unabhängig mit Luftabsaug-/Luftzufuhrvorrichtungen im unteren Bereich und mit einer Wassersammmel- und Wasserablaufvorrichtung versehen ist, und
- eine Reihe von Leitungen, zum Recycling des Wassers oder der Luft, welche zumindest in einem ersten Wiederaufbereitungsreaktor für Schlämme oder für ein Gemisch aus Schlämmen und organischem Material gesammelt oder abgesaugt wurden, wenigstens in einen zweiten Reaktor zur Behandlung von pflanzlichem Material.

7. Vorrichtung nach Anspruch 6, **dadurch gekennzeichnet, dass** sie eine zweite Vormischzone für pflanzliches Material mit einem Strukturmaterial umfasst.

8. Vorrichtung nach einem der Ansprüche 6 und 7, **dadurch gekennzeichnet, dass** die Reaktoren zumindest drei Zonen umfassen, und dass die Reihe von Leitungen Leitungen zum Recycling des Wassers oder der Luft, welche zumindest in einer ersten oder zweiten Zone eines Wiederaufbereitungsreaktors für Schlämme oder für ein Gemisch aus Schlämmen und organischem Material gesammelt oder abgesaugt wurden, in beziehungsweise wenigstens eine zweite oder eine dritte Zone eines zweiten Reaktors zur Behandlung von pflanzlichem Material, umfasst.

9. Vorrichtung nach einem der Ansprüche 6 bis 8, **dadurch gekennzeichnet, dass** zumindest die zwei ersten Zonen eines ersten Wiederaufbereitungsreaktors für Schlämme oder für ein Gemisch aus Schlämmen und organischem Material jeweils einen Temperaturfühler umfassen, der mit einem der Reihe von Leitungen eingebauten Regelventil verbunden ist.

10. Vorrichtung nach einem der Ansprüche 6 bis 9, **dadurch gekennzeichnet, dass** sie zudem zumindest eine Nachbehandlungszone zur Trennung der Abbauprodukte und des Strukturmaterials und zur Recycling des Strukturmaterials umfasst.

## Claims

1. A method for biologically decomposing organic materials, as sludges or a mixture of sludges with organic wastes on the one hand, and vegetable matter on the other hand, which process comprises mixing the organic materials with a structuring material and loading them into a biological decomposition reactor, **characterised in that** it comprises :
- carrying out a first biological decomposition process for organic materials, as sludges or a mixture of sludges with organic wastes, in a first treatment reactor which is a corridor open at both ends and divided into at least three zones, each zone being independently provided with air suction/blowing devices in the lower section and with a water collection and discharge device, the first process comprising :
a) introducing the mixture of structuring material and sludges or a mixture of sludges with organic wastes, into a first zone of the first reactor in which air suction is provided under a temperature-controlled suction flow, so that the temperature in the material undergoing treatment does not exceed a rated value,
b) transferring it to a second zone of the first reactor by turning over the material obtained in stage a), and continuing the treatment of the material by providing air suction under a temperature-controlled suction flow, so that the temperature in the material undergoing treatment does not exceed a rated value, and
c) transferring it to a third zone of the first reactor by turning over the material obtained in stage b), and continuing the treatment of the material by providing air suction under a temperature-controlled suction flow, so that the temperature in the material undergoing treatment does not exceed a rated value, and
- carrying out a second biological decomposition process for vegetable matter in a second treatment reactor which is a corridor open at both ends and divided into at least three zones, each zone being independently provided with air suction/blowing devices in the the lower section and with a water collection and discharge device, the second process comprising :
d) introducing the mixture of vegetable matter and structuring material into a first zone of the second reactor in which air suction is provided under a temperature-controlled suction flow, so that the temperature in the material undergoing treatment does not exceed a rated value,
e) transferring it to a second zone of the second reactor by turning over the material obtained in stage d), and continuing the treatment of the material by providing air suction under a temperature-controlled suction flow, so that the temperature in the material undergoing treatment does not exceed a rated value, and
f) transferring it to a third zone of the second reactor by turning over the material obtained in stage e), and continuing the treatment of the material by providing air suction under a temperature-controlled suction flow, so that the temperature in the material undergoing treatment does not exceed a rated value,
the process further comprising :
- feeding the air sucked or the water discharged in at least one of stages a) and b) of the first treatment process for sludges or a mixture of sludges and organic wastes, to at least one of stages b) and c) of the second treatment process for vegetable matter.

2. A method according to claim 1, **characterized in that** the step of continuing the treatment of the material by providing air suction in stage c) is carried out under a predetermined flow of suction or blowing air.

3. A method according to any one of claims 1 and 2, **characterized in that** the step of transferring the materials from one zone to the other is carried out batchwise, at the end of the predetermined retention time in each zone, with all the materials of one zone being transferred, by turning over, to the following zone.

4. A method according to any one of the preceding claims, **characterized in that** the step of transferring the treated materials by turning over starts from those materials obtained in the last stage and goes back to the first stage.

5. A method according to any one of the preceding claims, **characterized in that** it further comprises, for each of both processes, removing the material obtained in the last zone, separating the structuring material from the decomposition material, and recycling at least partially the structuring material.

6. An installation for carrying out a method according to any one of the preceding claims, **characterized in that** it comprises:
- a premixing zone for sludges or a mixture of sludges with organic wastes, and for a structuring material,
- one or more first treatment reactors for receiving the premixture from the premixing zone, each first reactor being a corridor open at both ends and divided into at least three zones, each zone being independently provided with air suction/blowing devices in the lower section and with a water collection and discharge device,
- one or more second treatment reactors for vegetable matter, each second reactor being a corridor open at both ends and divided into at least three zones, each zone being independently provided with air suction/blowing devices in the lower section and with a water collection and discharge device,
- an assembly of ducts for recycling at least the water collected or the air sucked in at least one first treatment reactor for sludges or a mixture of sludges with organic wastes, to at least one second treatment reactor for vegetable matter.

7. An installation according to claim 6, **characterized in that** it comprises a second premixing zone for vegetable matter and a structuring material.

8. An installation according to any one of claims 6 and 7, **characterized in that** the reactors comprise at least three zones, and the assembly of ducts comprises ducts for recycling at least the water collected or the air sucked in at least one first or second zone of a first treatment reactor for sludges or a mixture of sludges with organic wastes, to at least one second or third zone respectively of a second treatment reactor for vegetable matter.

9. An installation according to any one of claims 6 to 8, **characterized in that** each of the first two zones at least of a first treatment reactor for sludges or a mixture of sludges with organic wastes, comprises a temperature sensor connected to an adjusting valve incorporated into the assembly of ducts.

10. An installation according to any one of claims 6 to 9, **characterized in that** it further comprises at least one post-treatment zone for separating the decomposition materials and the structuring material, and for recycling the structuring material.
